# EUROPEAN PATENT APPLICATION

(11) **EP 4 811 784 A1**
(43) Date of publication of application: **23.09.2026**
(21) Application number: 24891871.6
(22) Date of filing: 13.11.2024
(51) Int. Cl.: H04N 19/149, H04N 19/147, H04N 19/124, H04N 19/70, H04N 19/132, H04N 19/176

(54) **MURA COMPENSATION DEVICE**

(30) Priority: 15.11.2023 KR 20230158446; 08.05.2024 KR 20240060344
(71) Applicant: LX Semicon Co., Ltd., Daejeon 34027 (KR)
(72) Inventor: KIM, Chan Yung, Daejeon 34027 (KR); SON, Chang Hoon, Daejeon 34027 (KR); SHIN, Hyeon Woon, Daejeon 34027 (KR); LEE, Ji Won, Daejeon 34027 (KR); LIM, Ho Min, Daejeon 34027 (KR)
(74) Representative: Goddar, Heinz J.
(86) International application number: PCT/KR2024/096547
(87) International publication number: WO 2025/105925

(57) **Abstract**

Disclosed is a mura compensation device. The mura compensation device comprises: a detection unit that detects mura on a display panel from an image of the display panel and calculates a mura compensation value for compensating for the detected mura; and an encoder that calculates residuals between the calculated mura compensation value and a curved surface predicted by applying the calculated mura compensation value to a curved surface prediction model, detects abnormal residuals and normal residuals from the calculated residuals, and compresses the detected abnormal residuals and normal residuals into compensation values of preset sizes through different codebooks.

## Description

### TECHNICAL FIELD

The embodiments relate to a mura compensation device.

### BACKGROUND ART

With the advancement of the information society, demand for display devices for displaying images is increasing in various forms, and recently, various types of display devices such as liquid crystal display (LCD) devices or organic light emitting display (OLED) devices have been utilized.

A manufacturing process of a display device includes not only an assembly process but also an inspection process for inspecting image quality. The inspection process for inspecting image quality includes a process for inspecting luminance deviation, color deviation, and the like of a display panel. When an image is displayed by applying image data of the same size to the pixels of the display panel, the same luminance and color should be reproduced over the entire area of the display panel. However, due to a process error, mura defects such as stains and color deviations may occur even when an image is displayed by applying the same image data.

These mura defects have a global tendency, and abnormal data deviating from the global tendency may intermittently occur for various reasons. Restoration performance for intermittently occurring abnormal data may be degraded, and as a result, image quality may be deteriorated. Accordingly, various methods capable of processing abnormal data are required.

### DISCLOSURE

### TECHNICAL PROBLEM

Embodiments may provide a mura compensation device capable of processing abnormal data.

The objects of the present invention are not limited to the objects mentioned above, and other objects not mentioned herein will be clearly understood by those skilled in the art from the following description.

### TECHNICAL SOLUTION

According to an embodiment of the present invention, a mura compensation device may include: a detector configured to detect mura of a display panel from an image captured of the display panel and calculate a mura compensation value for compensating for the detected mura; and an encoder configured to calculate a residual between the calculated mura compensation value and a curved surface predicted by applying the calculated mura compensation value to a curved surface prediction model, detect an abnormal residual and a normal residual from the calculated residual, and compress the detected abnormal residual and the detected normal residual into compensation values of a predetermined size using different codebooks, respectively.

The encoder may include: an abnormal data detector configured to detect an abnormal residual and a normal residual from the calculated residual; a first vector quantizer configured to output the detected normal residual as a compressed compensation value of a predetermined size using a pre-generated first codebook; and a second vector quantizer configured to compress the detected abnormal residual into a compressed compensation value of a predetermined size using a pre-generated second codebook.

The abnormal data detector may vectorize the calculated residual in units of blocks, compare each of the vectorized residuals with a predetermined threshold, and detect a residual smaller than the threshold as the abnormal residual as a result of the comparison.

The first vector quantizer may vectorize the calculated residual in units of blocks, sample a predetermined number of residuals from the vectorized residuals, compare a vector of the sampled residuals with a predetermined centroid, assign the same index as that assigned to the cluster to which the closest centroid belongs as a result of the comparison, and generate a first codebook using the vector to which the index is assigned as a codeword.

The second vector quantizer may vectorize the calculated residual in units of blocks, compare the vectors in units of blocks with a predetermined centroid, assign the same index as that assigned to the cluster to which the closest centroid belongs as a result of the comparison, and generate a second codebook using the indexed vector as a codeword.

The encoder may sample a predetermined number of the stored mura compensation values and predict a curved surface for the mura compensation values based on the sampled mura compensation values.

The encoder may normalize coordinates of the sampled mura compensation values, calculate coefficients of the curved surface prediction model by applying the normalized coordinates to the sampled mura compensation values, and predict the curved surface using the calculated coefficients and the normalized coordinates.

A mura compensation device according to an embodiment may include: a memory configured to store a compensation value compressed to a predetermined size for compensating for mura of a display panel; and a decoder configured to restore a previously predicted curved surface by applying the compressed compensation value to a curved surface prediction model, restore a residual from a codebook using the compressed compensation value, and restore a mura compensation value using the restored curved surface and the residual, wherein the codebook may include a first codebook for restoring an abnormal residual among the restored residuals and a second codebook for restoring a normal residual among the restored residuals.

The decoder may select one codeword from one of the first and second codebooks using the compressed compensation value, and restore the selected codeword as a residual between the predicted curved surface and the mura compensation value.

The decoder may restore the mura compensation value by adding the restored curved surface and the residual.

### EFFECT OF THE INVENTION

The present invention may calculate a residual between a mura compensation value and a curved surface predicted by applying compensation values sampled from the mura compensation value to a curved surface prediction model, detect an abnormal residual and a normal residual from the calculated residual, and compress the mura compensation value by vector-quantizing the detected abnormal residual and the detected normal residual using different codebooks, respectively, thereby effectively restoring abnormal data.

The present invention may separately generate codebooks for abnormal data and normal data, respectively, but since the overall size of the codebooks is the same, additional memory is not required.

The effects of the present invention are not limited to the effects mentioned above, and other effects not mentioned herein will be clearly understood by those skilled in the art from the claims.

### BRIEF DESCRIPTION OF THE DRAWINGS

FIG. 1 is a view showing a display device according to an embodiment of the present invention.
FIG. 2 is a view for explaining a mura compensation principle of a display device according to an embodiment.
FIG. 3 is a view showing a detailed configuration of the mura detector shown in FIG. 2.
FIG. 4 is a view showing a detailed configuration of the encoder shown in FIG. 3.
FIG. 5 is a view showing a method of compressing a mura compensation value according to an embodiment of the present invention.
FIGS. 6A to 6D and FIGS. 7 to 12 are views for explaining a mura compensation value compression process.
FIG. 13 is a view showing a detailed configuration of the mura compensator shown in FIG. 2.
FIGS. 14 to 15 are views showing a process of restoring a mura compensation value according to an embodiment of the present invention.
FIGS. 16A to 16C are views for comparing and explaining restoration performance of an embodiment.

### MODE OF PRACTICING THE INVENTION

Hereinafter, the embodiments disclosed in this specification will be described in detail with reference to the accompanying drawings, identical or similar components will be assigned the same reference numbers regardless of their drawing reference numbers, and redundant explanations thereof will be omitted. The suffixes "module" and "part" used for components in the following description are assigned or used interchangeably only for the sake of ease in writing the specification and do not have their own distinguishing meanings or roles. Also, in explaining the embodiments disclosed in this specification, when it is determined that detailed descriptions of related known technologies may obscure the gist of the embodiments disclosed in this specification, such detailed descriptions will be omitted. Furthermore, the accompanying drawings are intended to aid in understanding the embodiments disclosed herein, and the technical ideas disclosed herein are not limited by these drawings, encompassing all modifications, equivalents, or substitutions within the spirit and technical scope of the present invention.

Terms containing ordinal numbers, such as first, second, and the like, may be used to describe different components, but the components are not limited by such terms. These terms are used for the sole purpose of distinguishing one component from another.

When a component is referred to as being "coupled" or "connected" to another component, it should be understood that it may be directly coupled or connected to the another component, however, there may be other components in between. Conversely, when a component is said to be "directly coupled" or "directly connected" to another component, it should be understood that there are no other components in between.

Singular expressions include plural expressions unless the context clearly indicates otherwise.

The terms such as "include" or "have", as used herein, are intended to indicate the presence of the features, numbers, steps, operations, components, parts, or any combination thereof described in the specification, however, they do not preclude the presence of or the possibility of addition of one or more other features, figures, steps, actions, components, parts, or any combination thereof.

Embodiments propose a new method of calculating a residual between a mura compensation value and a curved surface predicted by applying compensation values sampled from the mura compensation value to a curved surface prediction model, detecting an abnormal residual and a normal residual from the calculated residual, and compressing the mura compensation value by vector-quantizing the detected abnormal residual and the detected normal residual using different codebooks, respectively.

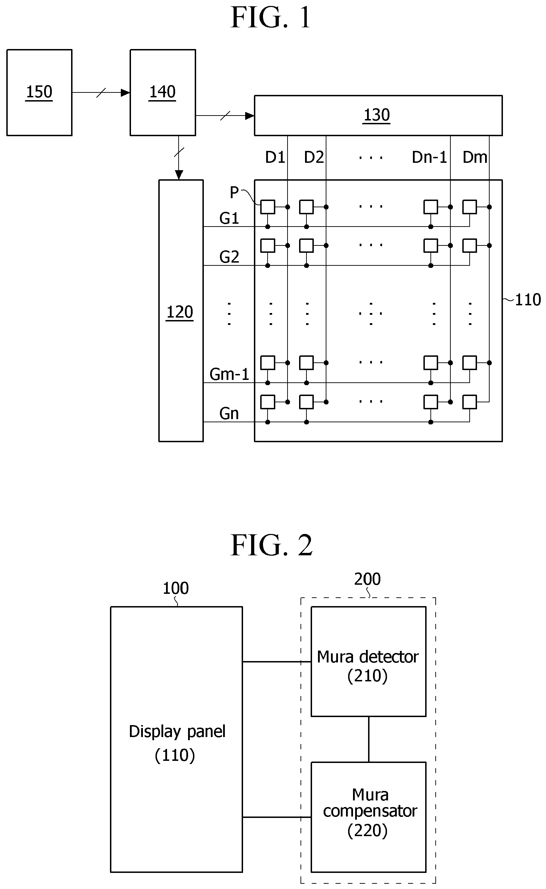

FIG. 1 is a view showing a display device according to an embodiment of the present invention.

Referring to FIG. 1, a display device 100 according to an embodiment of the present invention may include a display panel 110 and a display driving circuit for driving the display panel. The display driving circuit may include a gate driver 120, a data driver 130, and a timing controller 140. The display device may further include a host system 150 for supplying various timing signals to the timing controller 140.

The display panel 110 may include a plurality of gate lines G1 to Gn and a plurality of data lines D1 to Dm arranged to cross each other to define a plurality of pixel areas, and pixels P respectively provided in the plurality of pixel areas.

The gate driver 120 may be disposed on one side of the display panel 110, for example, a left side as shown, but in some cases, may be disposed on both one side and the other side of the display panel 110 facing each other, for example, both the left and right sides. The gate driver 120 may include a plurality of gate driver integrated circuits (ICs) (not shown).

The gate driver 120 may be in the form of a tape carrier package in which a gate driver IC is mounted, but is not necessarily limited thereto, and the gate driver IC may be directly mounted on the display panel 110.

The data driver 130 converts a digital image signal transmitted from the timing controller 140 into an analog source signal and outputs the analog source signal to the display panel 110. Specifically, the data driver 130 outputs the analog source signal to the data lines D1 to Dm in response to a data control signal (DCS) transmitted from the timing controller 140.

The data driver 130 may be disposed on one side of the display panel 110, for example, an upper side, but in some cases, may be disposed on both one side and the other side of the display panel 110 facing each other, for example, both the upper and lower sides. In addition, the data driver 130 may be in the form of a tape carrier package in which a source driver IC is mounted, but is not necessarily limited thereto.

The timing controller 140 may receive various timing signals including a vertical synchronization signal (Vsync), a horizontal synchronization signal (Hsync), a data enable (DE) signal, a clock signal (CLK), and the like from the host system 150 to generate the data control signal (DCS) for controlling the data driver 130 and a gate control signal (GCS) for controlling the gate driver 120. In addition, the timing controller 140 may receive image data (RGB) from the host system 150, convert the image data into image data (RGB') in a form processable by the data driver 130, and output the converted image data.

The timing controller 140 may include a mura compensator. The mura compensator may include a memory and a decoder. A compressed mura compensation value may be stored in the memory, and the decoder may restore the mura compensation value by decoding the mura compensation value stored in the memory.

The timing controller 140 may correct the image data using the restored mura compensation value. The timing controller 140 may determine a mura compensation value for each of a plurality of pixels based on the image data for each frame, and correct the image data using the determined mura compensation value.

In an embodiment, a case where the mura compensator is implemented in the timing controller is described as an example, but the present invention is not necessarily limited thereto. For example, the mura compensator may be implemented separately from the timing controller or may be implemented in the host system or the data driver.

The data control signal (DCS) may include a source start pulse (SSP), a source sampling clock (SSC), a source output enable (SOE) signal, and the like, and the gate control signal (GCS) may include a gate start pulse (GSP), a gate shift clock (GSC), a gate output enable (GOE) signal, and the like.

The host system 150 may be implemented as any one of a navigation system, a set-top box, a DVD player, a Blu-ray player, a personal computer (PC), a home theater system, a broadcast receiver, and a phone system.

The host system 150 may include a system on chip (SoC) having a built-in scaler to convert digital image data (RGB) of an input image into a format suitable for display on the display panel 110. The host system 150 may transmit the digital image data (RGB) and the timing signals to the timing controller 140.

FIG. 2 is a view for explaining a mura compensation principle of a display device according to an embodiment.

Referring to FIG. 2, a mura compensation device 200 according to an embodiment may include a mura detector 210 and a mura compensator 220. The mura detector 210 may be configured separately without being implemented in the display device, unlike the mura compensator 220, but is not necessarily limited thereto.

The mura detector 210 may detect mura characteristics or mura of a display panel. The mura detector 210 may detect the mura using a test image displayed on the display panel 110.

The mura detector 210 may calculate a mura compensation value for compensating for the detected mura, compress the calculated mura compensation value, and provide the compressed mura compensation value to the mura compensator. The compressed mura compensation value may be stored in an internal memory of the mura compensator.

The mura compensator 220 may calculate a residual between the calculated mura compensation value and a curved surface predicted by applying compensation values sampled from the mura compensation value to a curved surface prediction model, detect abnormal data (or an abnormal residual) from the calculated residual, and vectorize the detected abnormal data and the detected normal data to compress the mura compensation value through vector quantization.

The mura compensator 220 may select a codeword from a pre-generated codebook based on the vectorized abnormal data and normal data, and output an index of the selected codeword as a compressed compensation value. In this case, the mura compensator 200 may generate a plurality of codebooks based on the vectorized abnormal data and normal data. For example, the codebooks may include a first codebook generated based on the normal data and a second codebook generated based on the abnormal data.

In an embodiment, since a plurality of mura compensation values are compressed through vector quantization, compression efficiency may be significantly improved compared to a conventional compression method using scalar quantization.

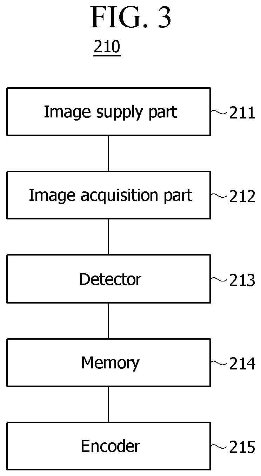

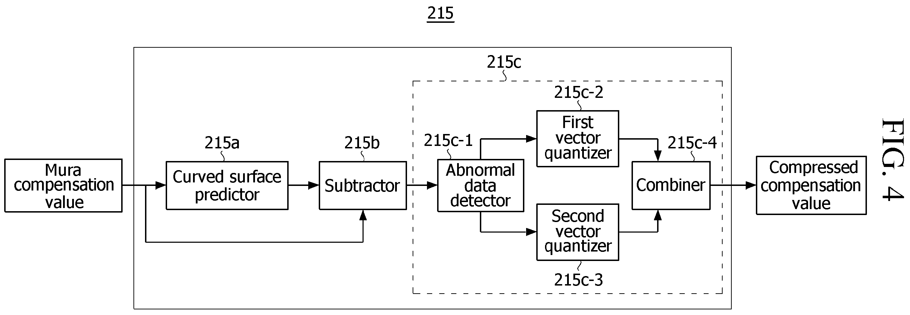

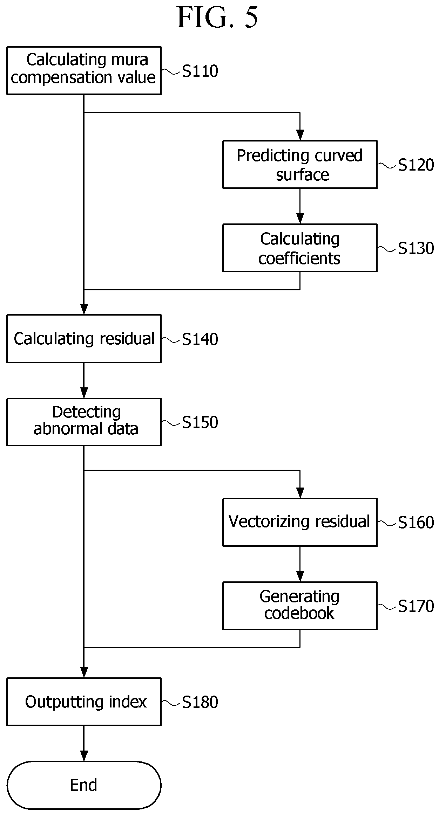

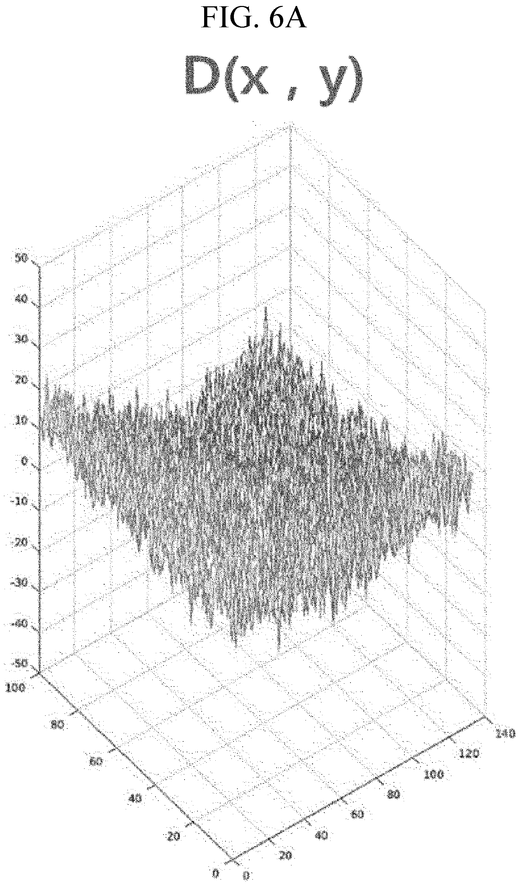

FIG. 3 is a view showing a detailed configuration of the mura detector shown in FIG. 2, FIG. 4 is a view showing a detailed configuration of the encoder shown in FIG. 3, FIG. 5 is a view showing a method of compressing a mura compensation value according to an embodiment of the present invention, and FIGS. 6A to 6D and FIGS. 7 to 12 are views for explaining a mura compensation value compression process.

Referring to FIGS. 3 to 12, the mura detector 210 of the embodiment may include an image supply part 211, an image acquisition part 212, a detector 213, a memory 214, and an encoder 215.

The image supply part 211 may supply predetermined test images for each grayscale to the display panel. Here, the test image for each grayscale may be a test image of a predetermined grayscale, for example, a test image at 36 grayscale, 64 grayscale, or 128 grayscale, but is not limited thereto.

The image acquisition part 212 may acquire an image by capturing the test image for each grayscale displayed on the display panel.

The detector 213 may detect mura of the display panel from the acquired image. The detector 213 may compare the acquired image with a predetermined reference image and detect, as mura, a difference value between a defective luminance value and a non-defective luminance value as a result of the comparison.

The detector 213 may calculate a mura compensation value from a predetermined compensation equation for compensating for the detected difference value (S110). The compensation equation is defined as in Equation 1 below.$z \left(x, y\right) = a \left(x, y\right) {x}^{2} + b \left(x, y\right) x + c \left(x, y\right)$

Here, z represents a difference value between a defective luminance value and a non-defective luminance value, (x, y) represents a two-dimensional coordinate value, and a, b, and c represent coefficients. Equation 1 defined as a quadratic compensation equation is only an example for explaining the embodiment, and is not necessarily limited thereto. For example, as the compensation equation, a linear or cubic or higher equation may be used, and an offset value may also be applied.

The coefficient values a, b, and c of the compensation equation for compensating for the detected difference value are calculated as the mura compensation value. The mura compensation value may be data in a matrix form calculated for each coordinate of all pixels.

The detector 213 may store a mura compensation value D(x, y) calculated for each coordinate value (x, y) of all pixels in the memory 214.

The mura compensation value D(x, y) calculated in this way may be represented over the entire screen as shown in FIG. 6A.

The encoder 215 may compress the mura compensation value stored in the memory 214 at a predetermined compression rate and generate a compressed mura compensation value. Referring to FIG. 4, the encoder 215 may include a curved surface predictor 215a, a subtractor 215b, and a vector quantizer 215c.

The curved surface predictor 215a may sample a predetermined number of the stored mura compensation values D(x, y) and predict a curved surface for the mura compensation value based on the sampled mura compensation values (S120). The curved surface for the mura compensation value may be modeled as a higher-order polynomial as in Equation 2 below.$S \left(x, y\right) = {p}_{00} + {p}_{10} x + {p}_{10} y + {p}_{20} {x}^{2} + {p}_{11} xy + {p}_{02} {y}^{2}$

Here, pᵢⱼ (i, j = 0, 1, 2, ..., n) may be coefficients.

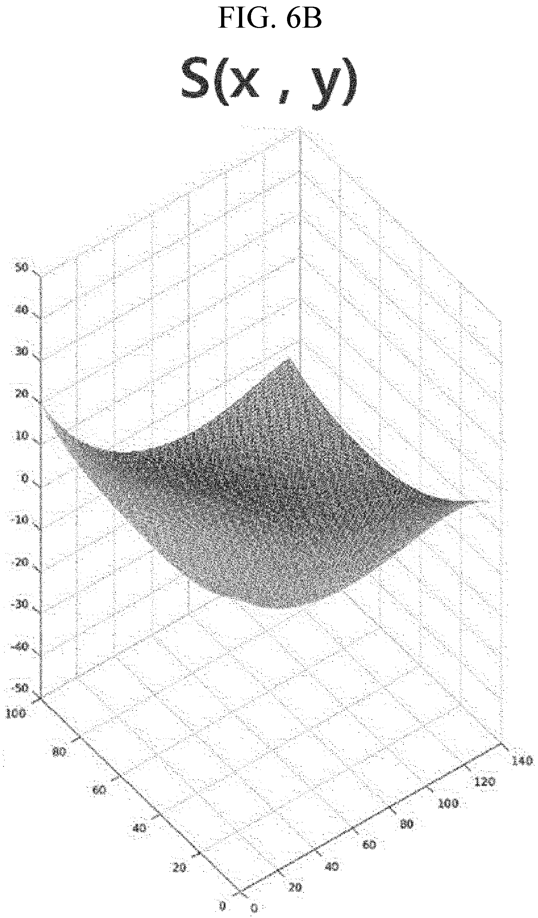

The higher-order polynomial such as Equation 2 is only an example, and is not necessarily limited thereto. Such curved surface prediction for the mura compensation value may mean globally predicting the entire curved surface using the sampled mura compensation values, which are two-dimensional data. A curved surface S(x, y) predicted using the higher-order polynomial may be represented as shown in FIG. 6B.

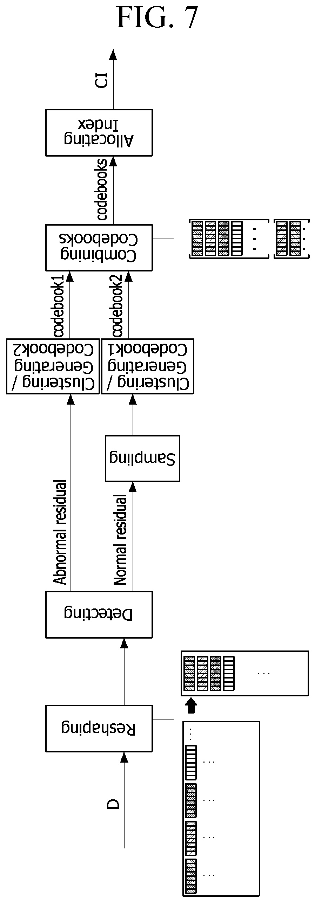

For example, referring to FIG. 7, the curved surface predictor 215a may sample a predetermined number of mura compensation values from the stored mura compensation values D(x, y) (S121). In this case, the curved surface predictor 215a may randomly sample a predetermined number n of mura compensation values among the stored mura compensation values.

The curved surface predictor 215a may normalize the x- and y-coordinates of the n sampled mura compensation values (S122). Such normalization of coordinates may be normalization for matching coordinates of a curved surface to be predicted.

For example, equations for normalizing the x- and y-coordinates may be defined as follows.$\begin{matrix}Xn = \left(X-Xmu\right) / Xstd \\ Yn = \left(Y-Ymu\right) / Ystd\end{matrix}$

Here, (X - Xmu) and (Y - Ymu) represent means of x and y, respectively, and Xstd and Ystd represent normal distributions of x and y, respectively.

The curved surface predictor 215a may calculate variables of a polynomial of a predetermined order by applying normalized coordinates to the sampled n mura compensation values (S123). For example, the variables of the polynomial according to Equation 2 may include x, y, x², xy, and y².

For example, in Equation 2 representing a matrix for n sampled mura compensation values, the variables may be {x₀, y₀, x₀², x₀y₀, y₀²}, {x₁, y₁, x₁², x₁y₁, y₁²}, ..., {xₙ, yₙ, xₙ², xₙyₙ, yₙ²}.

The curved surface predictor 215a may calculate coefficient values of the polynomial using the calculated variables (S130). The curved surface predictor 215a may calculate the coefficient values of the higher-order polynomial through Equation 2 (S124), and may globally predict a curved surface using the calculated coefficient values and the normalized x- and y-coordinates (S125).

In addition, the curved surface predictor 215a may predict the curved surface for the mura compensation value based on all of the mura compensation values instead of sampling a predetermined number of the stored mura compensation values. When sampling is not performed, the curved surface may be accurately predicted, but the amount of computation may increase. In the embodiment, the curved surface may be predicted by sampling the mura compensation values.

The subtractor 215b may calculate a residual using the mura compensation value and the predicted curved surface (S140). The subtractor 215b may calculate the residual by subtracting the value of the predicted curved surface from the mura compensation value. The residual R(x, y) calculated in this way is defined as in Equation 4 below.$R \left(x, y\right) = D \left(x, y\right) - S \left(x, y\right)$

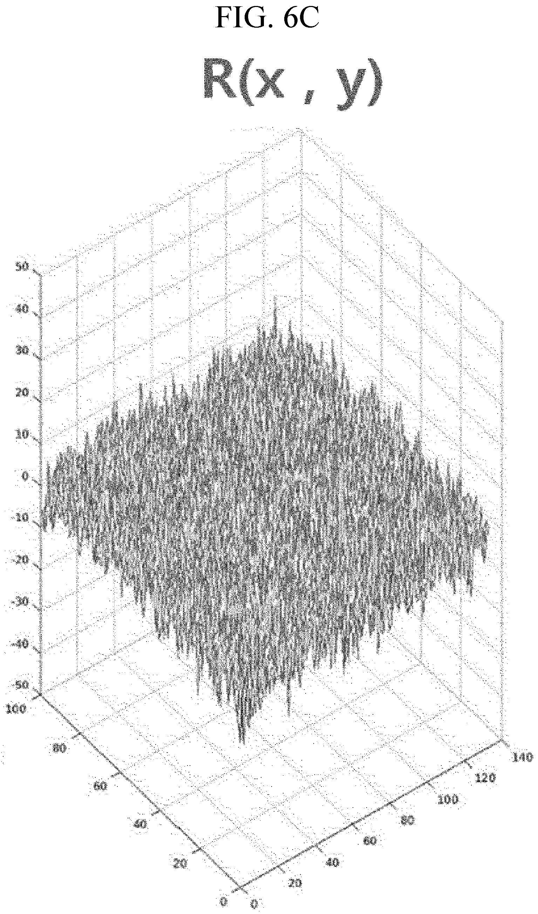

The residual R(x, y) obtained by subtracting the value of the predicted curved surface from the mura compensation value may be represented as shown in FIG. 6C. As the curved surface prediction becomes more accurate, the residual has a random distribution with a small range of values. In the embodiment, image quality degradation such as edge damage in a vector quantization process for vectorizing and compressing the residual through such curved surface prediction may be suppressed.

Through the process of obtaining the residual using the mura compensation value and the predicted curved surface, high-frequency components may be effectively removed while preserving low-frequency components of the data.

The vector quantizer 215c may generate a codebook using the calculated residual. The vector quantizer 215c may include an abnormal data detector 215c-1, a first vector quantizer 215c-2, a second vector quantizer 215c-3, and a combiner 215c-4.

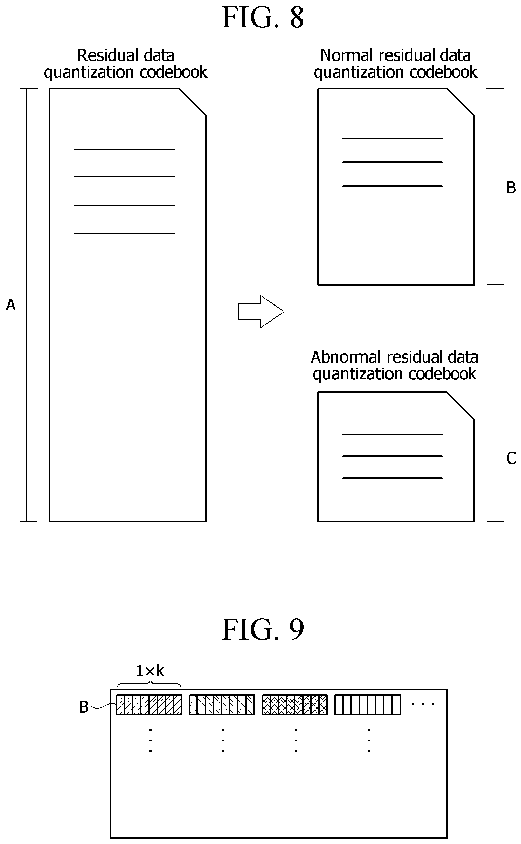

A vector quantization process will be described in detail with reference to FIG. 8 as follows.

The abnormal data detector 215c-1 may detect an abnormal residual from the calculated residual. The abnormal data detector 215c-1 may vectorize the calculated residual in units of blocks as shown in FIG. 9 (S150).

In this case, a block B may include a predetermined number of residuals and may be designated in units of pixel lines. The block B is designated in units of pixel lines, thereby reducing the capacity of a line memory, and may include a 1×k (k is a positive integer) vector. In the embodiment, the block is implemented as a 1×k vector in units of pixel lines, but is not necessarily limited thereto. For example, the block may be implemented as a k×1 or k×k vector.

When the residual is represented in 8 bits, the size of the vector may be represented as 1×k×8 bits. Here, k represents the size of the vector and may represent a compression rate. That is, in the embodiment, the compression rate varies according to the size of the vector, and the compression rate may increase as the size of the vector increases.

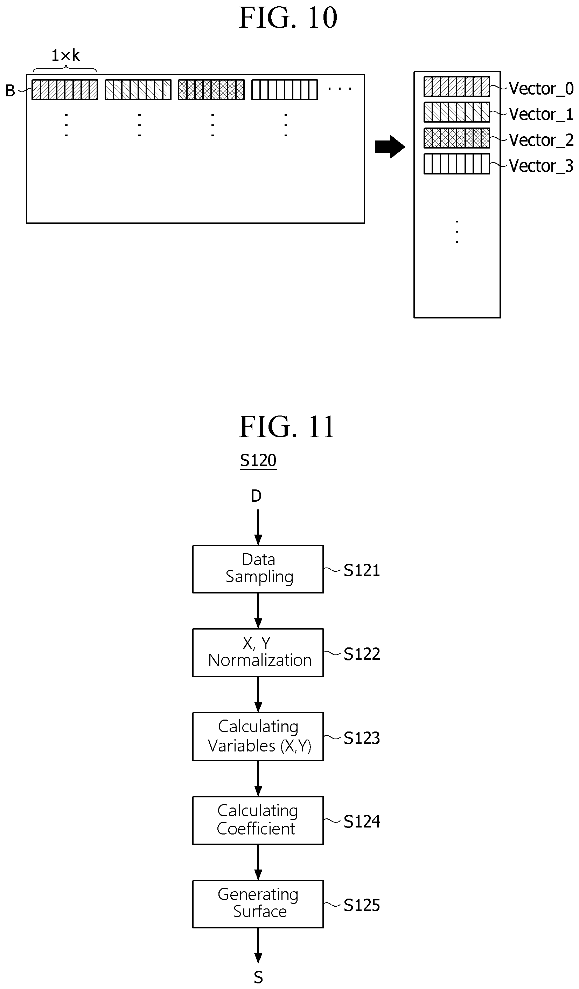

The abnormal data detector 215c-1 may rearrange the residuals vectorized in units of blocks as shown in FIG. 10. For example, the vectorized residuals may be Vector_0, Vector_1, ..., Vector_n.

The abnormal data detector 215c-1 may detect an abnormal residual from the rearranged residuals. For example, the abnormal data detector 215c-1 may compare each of the rearranged residuals with a predetermined threshold, and may detect a residual smaller than the threshold as the abnormal residual.

The first vector quantizer 215c-2 may randomly sample a predetermined number n of normal residuals, compare a vector of the sampled normal residuals with an arbitrarily assigned centroid as shown in FIG. 11, find the closest centroid as a result of the comparison, and assign the same index as that assigned to the cluster to which the closest centroid belongs. In the embodiment, clusters may be classified using K-means clustering. K-means clustering is most widely used in unsupervised learning and is an algorithm for dividing given data into several groups having similar characteristics.

The first vector quantizer 215c-2 may generate a first codebook (codebook 1) based on the indexed vector. The first codebook may include a plurality of codewords representing vectors in units of blocks, and an index may be assigned to each of the plurality of codewords.

The second vector quantizer 215c-3 may compare the vectors of the detected abnormal residuals with an arbitrarily assigned centroid as shown in FIG. 11, and find the closest centroid as a result of the comparison to assign the same index as that assigned to the cluster to which the closest centroid belongs.

The second vector quantizer 215c-3 may generate a second codebook (codebook 2) based on the indexed vector (S160). The second codebook may include a plurality of codewords representing vectors in units of blocks, and an index may be assigned to each of the plurality of codewords.

The combiner 215c-4 may combine the generated first codebook and second codebook to generate a single codebook. In the embodiment, a codebook having n indices may be generated, and a size of the codebook may be determined according to the number of bits representing the indices. A vector in units of blocks may be compressed into 8 bits corresponding to an index of the codebook, and a compression ratio may be 8:1.

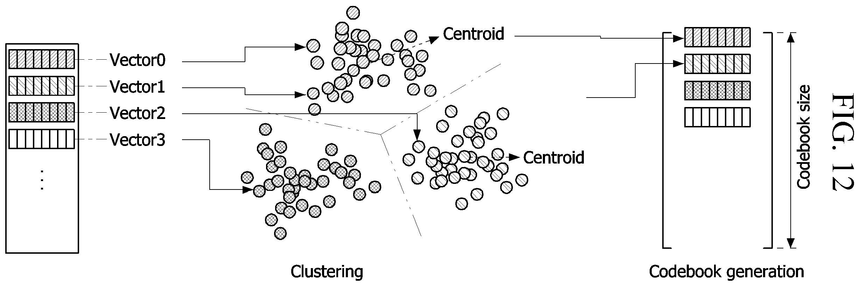

In the embodiment, a size A of a codebook that does not consider abnormal residuals may be maintained. As shown in FIG. 12, a sum of a size B of the first codebook and a size C of the second codebook may be equal to the size A of the codebook. For example, when the size A of the codebook is 256, the size B of the first codebook may be 192, and the size C of the second codebook may be generated as 64.

The combiner 215c-4 may select a codeword from a pre-generated codebook based on the calculated residual, and may output a codebook index (CI) of the selected codeword (S170). The calculated index may be compressed data of a mura compensation value.

In this case, the calculated index is a compressed compensation value, and together with the index, the codebook, coordinate values, and coefficient values calculated in the curved surface predictor may be stored to a memory of the mura compensator.

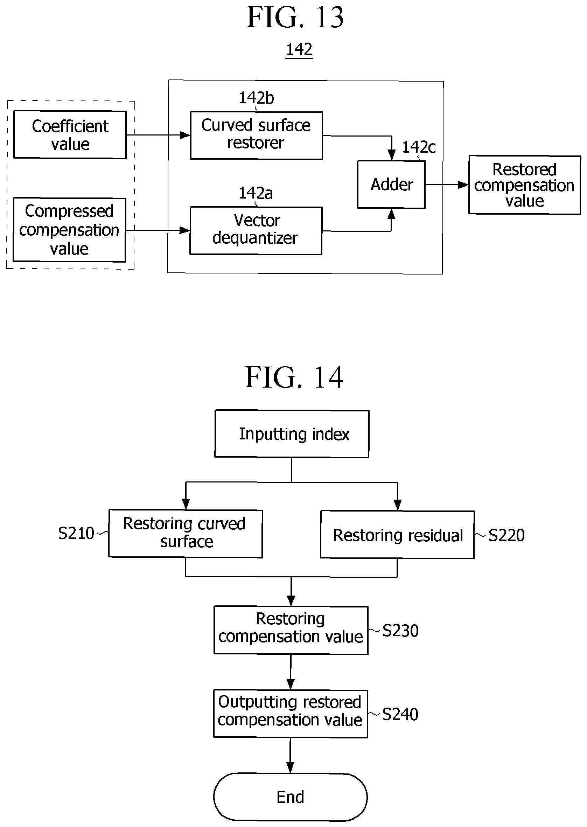

FIG. 13 is a view showing a detailed configuration of the mura compensator shown in FIG. 2, and FIGS. 14 to 15 are views showing a process of restoring a mura compensation value according to an embodiment of the present invention.

In an embodiment, a case in which a mura compensator for restoring a compressed mura compensation value is implemented inside a timing controller is described as an example, but the present invention is not necessarily limited thereto.

Referring to FIGS. 13 to 15, a mura compensator 220 according to an embodiment may include a memory 221 and a decoder 222, and the decoder 222 may include a curved surface restorer 222a, a vector dequantizer 222b, and an adder 222c.

The memory 221 may store the compressed compensation value from the mura detector and information required to restore the compressed compensation value, for example, coordinate values, coefficient values, and a codebook.

The curved surface restorer 222a may restore a curved surface using coordinate values and coefficient values calculated in the curved surface predictor (S210).

The vector dequantizer 222b may output a codeword of the codebook as a restored residual based on an index that is the compressed compensation value (S220). The output residual R' is an approximated value of R in which information loss has occurred. In this case, the codebook used in the vector dequantizer 222b may be identical to the codebook used in the vector quantizer 215c of the encoder 210.

The adder 222c may output a restored mura compensation value using the restored residual and the curved surface. The adder 222c may restore the mura compensation value by adding the values of the restored residual and the curved surface (S230), and may output the restored mura compensation value (S240). The restored mura compensation value D'(x, y) may be represented as shown in FIG. 6D and may be provided for image data compensation.

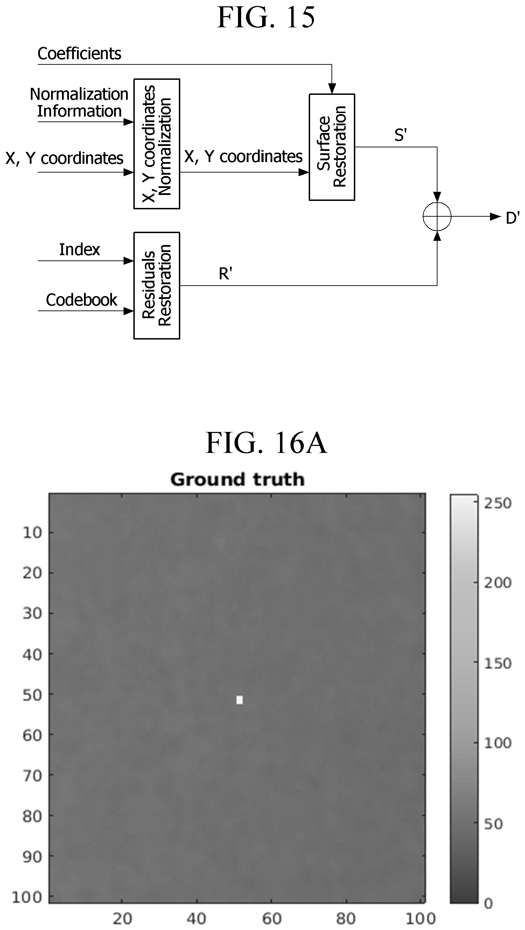

FIGS. 16A to 16C are views for comparing and explaining restoration performance of an embodiment.

Referring to FIGS. 16A to 16C, restoration performances of an embodiment in which a codebook for abnormal data is allocated and of a comparative example in which a codebook for abnormal data is not allocated are shown.

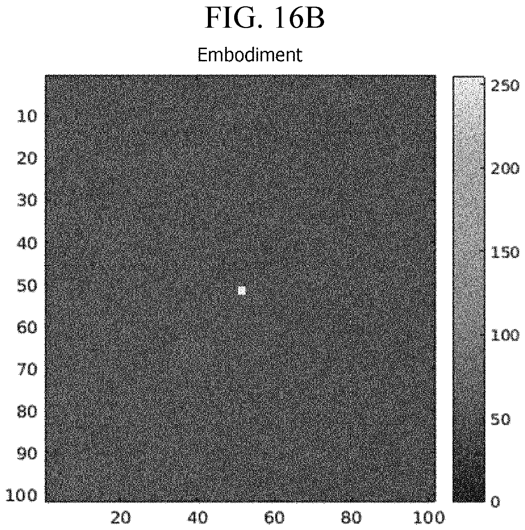

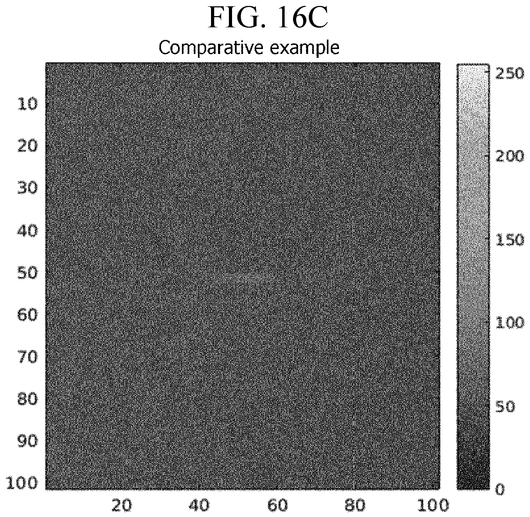

When the original data of FIG. 16A is compressed and restored using the embodiment, the abnormal data of the original data is restored as is, as shown in FIG. 16B, whereas when it is compressed and restored using the comparative example, the abnormal data of the original data is not properly restored, as shown in FIG. 16C.

Accordingly, it is apparent that the restoration performance of the embodiment is superior to the restoration performance of the comparative example.

Although the embodiments of the present invention have been described in more detail with reference to the accompanying drawings, the present disclosure is not necessarily limited to such embodiments, and may be modified in various ways within the scope without departing from the technical spirit of the present disclosure. Accordingly, the embodiments disclosed in the present specification are provided not to limit the technical spirit of the present disclosure, but to describe it, and the scope of the technical spirit of the present disclosure is not limited by these embodiments. Therefore, the embodiments described above should be understood in all respects as illustrative and not restrictive. The scope of protection of the present disclosure should be interpreted by the claims, and all technical ideas within an equivalent range thereof shall be construed to be within the scope of rights of the present disclosure.

## Claims

1. A mura compensation device, comprising:
a detector configured to detect mura of a display panel from an image captured of the display panel and calculate a mura compensation value for compensating for the detected mura; and
an encoder configured to calculate a residual between the calculated mura compensation value and a curved surface predicted by applying the calculated mura compensation value to a curved surface prediction model, detect an abnormal residual and a normal residual from the calculated residual, and compress the detected abnormal residual and the detected normal residual into compensation values of a predetermined size using different codebooks, respectively.

2. The mura compensation device of claim 1, wherein the encoder includes:
a detector configured to detect the abnormal residual and the normal residual from the calculated residual;
a first vector quantizer configured to compress the detected normal residual into a compressed compensation value of a predetermined size using a pre-generated first codebook; and
a second vector quantizer configured to compress the detected abnormal residual into a compressed compensation value of a predetermined size using a pre-generated second codebook.

3. The mura compensation device of claim 2, wherein the detector is configured to:
vectorize the calculated residual in units of blocks; and
compare each of the vectorized residuals with a predetermined threshold and detect a residual smaller than the threshold as the abnormal residual as a result of the comparison.

4. The mura compensation device of claim 2, wherein the first vector quantizer is configured to:
vectorize the calculated residual in units of blocks;
sample a predetermined number of residuals from the vectorized residuals;
compare a vector of the sampled residuals with a predetermined centroid to assign the same index as that assigned to the cluster to which the closest centroid belongs as a result of the comparison; and
generate the first codebook using the indexed vector as a codeword.

5. The mura compensation device of claim 2, wherein the second vector quantizer is configured to:
vectorize the calculated residual in units of blocks;
compare the vectors in units of blocks with a predetermined centroid to assign the same index as that assigned to the cluster to which the closest centroid belongs as a result of the comparison; and
generate the second codebook using the indexed vector as a codeword.

6. The mura compensation device of claim 1, wherein the encoder is configured to sample a predetermined number of the stored mura compensation values, and predict a curved surface for the mura compensation value based on the sampled mura compensation values.

7. The mura compensation device of claim 1, wherein the encoder is configured to:
normalize coordinates of the sampled mura compensation values;
calculate coefficients of the curved surface prediction model by applying the normalized coordinates to the sampled mura compensation values; and
predict the curved surface using the calculated coefficients and the normalized coordinates.

8. A mura compensation device, comprising:
a memory configured to store a compensation value compressed to a predetermined size for compensating for mura of a display panel; and
a decoder configured to restore a previously predicted curved surface by applying the compressed compensation value to a curved surface prediction model, restore a residual from a codebook using the compressed compensation value, and restore a mura compensation value using the restored curved surface and the residual,
wherein the codebook includes a first codebook for restoring an abnormal residual among the restored residuals and a second codebook for restoring a normal residual among the restored residuals.

9. The mura compensation device of claim 8, wherein the decoder is configured to select one codeword from one of the first and second codebooks using the compressed compensation value, and restore the selected codeword as a residual between the predicted curved surface and the mura compensation value.

10. The mura compensation device of claim 9, wherein the decoder is configured to restore the mura compensation value by adding the restored curved surface and the residual.
